# EUROPEAN PATENT SPECIFICATION

(11) **EP 2 391 492 B1**
(45) Date of publication and mention of the grant of the patent: **20.11.2013**
(21) Application number: 10701844.2
(22) Date of filing: 21.01.2010
(51) Int. Cl.: B29C 45/14, B65D 1/40, B65D 21/00, B65D 81/24

(54) **BARRIER-TYPE CONTAINER AND METHOD FOR MANUFACTURING**
BARRIEREARTIGER BEHÄLTER UND HERSTELLUNGSVERFAHREN DAFÜR
RÉCIPIENT DE TYPE BARRIÈRE ET PROCÉDÉ DE FABRICATION

(30) Priority: 27.01.2009 IT MO20090017
(43) Date of publication of application: 07.12.2011
(73) Proprietor: Chiari, Claudio, 42043 Gattatico (IT); Chiari, Erika, 40053 Bazzano (IT)
(72) Inventor: Chiari, Claudio, 42043 Gattatico (IT); Chiari, Erika, 40053 Bazzano (IT)
(74) Representative: Modiano, Micaela Nadia
(86) International application number: PCT/EP2010/050691
(87) International publication number: WO 2010/086274

(56) References cited:
- EP-A- 0 028 912
- EP-A- 0 140 282
- WO-A-98/40281
- FR-A- 2 607 110
- GB-A- 1 370 141
- JP-A- 3 254 932
- US-A- 4 078 508

## Description

### Technical field

The present invention relates to barrier-type containers according to the preamble of the claim 1 and to methods for manufacturing such containers.

### Background Art

Barrier-type containers are known which allow the packaging of products so as to obtain perfect insulation with respect to the surrounding environment, in order to preserve their characteristics intact, i.e., so as to not contaminate the surrounding environment.

In the food sector, for example, these containers are widely used in order to reduce the penetration of oxygen and moisture, so as to protect the shelf life of packaged products.

Barrier-type containers made of plastics are generally of a flexible type, such as pouches or bags, and are obtained by processing substrates made of plastics which are coupled or co-extruded.

However, these containers of a flexible type are not free from drawbacks, which include the fact that their irregular shape does not allow their stacking, making it necessary to use secondary packages, which enclose a plurality of containers, in order to allow their handling and storage. Display in the point of sale, moreover, also can be difficult and may require the use of auxiliary supports.

Barrier-type containers with stiffening layer, are known from EP0028912A1. A container comprising all the technical features of the preamble of claim 1 is know from FR 2607110 A1.

### Disclosure of the Invention

The aim of the present invention is to eliminate the drawbacks cited above of the background art, by providing a barrier-type container made of plastics which is rigid or semirigid and has a definite shape so as to allow an easy juxtaposition and stacking thereof during handling and storage as well as during display at the point of sale.

Within this aim, an object of the present invention is to have a production cycle that is simple and does not entail high costs and long times for processing.

Another object of the present invention is to provide a container that can be closed again after its first opening, being practical to use for consumers of the products packaged therein.

Another object of the present invention is to be flexible in use, adapting to the specific technical requirements linked to the packaging of the respective product as well as to the display requirements thereof.

Another object of the present invention is to ensure total insulation of the packaged product with respect to the surrounding environment.

Another object of the present invention is to have a structure which is simple, relatively easy to provide in practice, safe to use and effective in operation, as well as relatively low in cost.

This aim and these and other objects which will become better apparent hereinafter are achieved by the barrier-type container according to the present invention, that has the features set forth in claim 1. The container is obtainable with a method as set forth in claim 8.

The invention is also defined by a method for manufacturing a barrier-type container according to claim 4.

### Brief description of the drawings

Further characteristics and advantages of the present invention will become better apparent from the following detailed description of some preferred but not exclusive embodiments of a barrier-type container made of plastics, illustrated by way of non-limiting example in the accompanying drawings, wherein:
Figure 1 is a schematic perspective view of a first embodiment of a container which does not form part of the invention;
Figure 2 is a schematic sectional view of the container of Figure 1;
Figures 3-6 are schematic views of successive steps of the process for the production of the container of the preceding figures;
Figure 7 is a schematic perspective view of a second embodiment which does not form part of the invention;
Figure 8 is a schematic sectional view of the container of Figure 7;
Figures 9-12 are schematic views of successive steps of the method for production of the container of Figures 7-8;
Figure 13 is a schematic perspective view of a third embodiment which does not form part of the invention;
Figure 14 is a schematic sectional view of the container of Figure 13;
Figure 15 is a schematic perspective view of a fourth embodiment which does not form part of the invention;
Figure 16 is a schematic sectional view of the container of Figure 15 inside the mold for blow-molding;
Figure 17 is a schematic perspective view of a fifth embodiment, a container according to the invention;
Figure 18 is a schematic sectional view of the container of Figure 17;
Figures 19-21 are schematic views of successive steps of the method for producing the container of Figures 17-18;
Figure 22 is a schematic perspective view of a first embodiment of a lid of the container according to the invention;
Figures 23-24 are schematic views of successive steps of the method for producing the lid of Figure 22;
Figures 25-28 are schematic views of successive steps of the method for producing a second embodiment of a lid of the container according to the invention.

### Ways of carrying out the Invention

With reference to the figures, the reference numeral 1 generally designates a barrier container made of plastics.

The container 1 comprises a stiffening structure 2 made of plastics, which is obtained by injection-molding or blow-molding, and at least one barrier element 3a, 3b, 3c, 3d, 3e, 3f made of a flexible aluminum sheet, which are directly joined at at least one respective portion. At least one between the stiffening structure 2 and the barrier element 3a, 3b, 3c, 3d, 3e, 3f forms a concave surface for containing one or more products to be packaged.

The expression "directly joined" is used to mean that the stiffening structure 2 and the barrier element 3a, 3b, 3c, 3d, 3e, 3f are cohesively in contact with each other, without the interposition of auxiliary materials.

Plastics used to provide the stiffening structure 2 can be of the type of polyethylene or polypropylene, depending on the compatibility with the products to be packaged.

The barrier element 3a, 3b, 3c, 3d, 3e, 3f is processed by die-cutting a flexible sheet based on aluminum or alloys thereof obtained by rolling. Advantageously, the material in sheet form from which the barrier element 3a, 3b, 3c, 3d, 3e, 3f is obtained has undergone, on at least one of the two mutually opposite faces, a treatment for coating with such materials as to make it sealable to at least the plastics of which the stiffening structure 2 is made and preferably also sealable onto itself, these treatments being of a known type. The material in sheet form thus obtained is known conventionally as of the "double-sealing" type.

The container 1 can be used for example for the packaging of food products, pharmaceutical products, chemical products in general, both in the solid state and in the liquid state.

In a possible embodiment, the container 1 is rigid and the stiffening structure 2 provides a vessel 4 provided with a bottom wall 4a from which a lateral wall 4b protrudes which forms, on the opposite side of such bottom wall, an open mouth 4c.

The container 1 can have at least two barrier elements, a first element 3a for covering the bottom wall 4a and a second element 3b for covering the side wall 4b, the vessel 4 being obtained by injection-molding. The first barrier element 3a is arranged so as to cover the bottom wall 4a on the side directed toward the inside of the container 1.

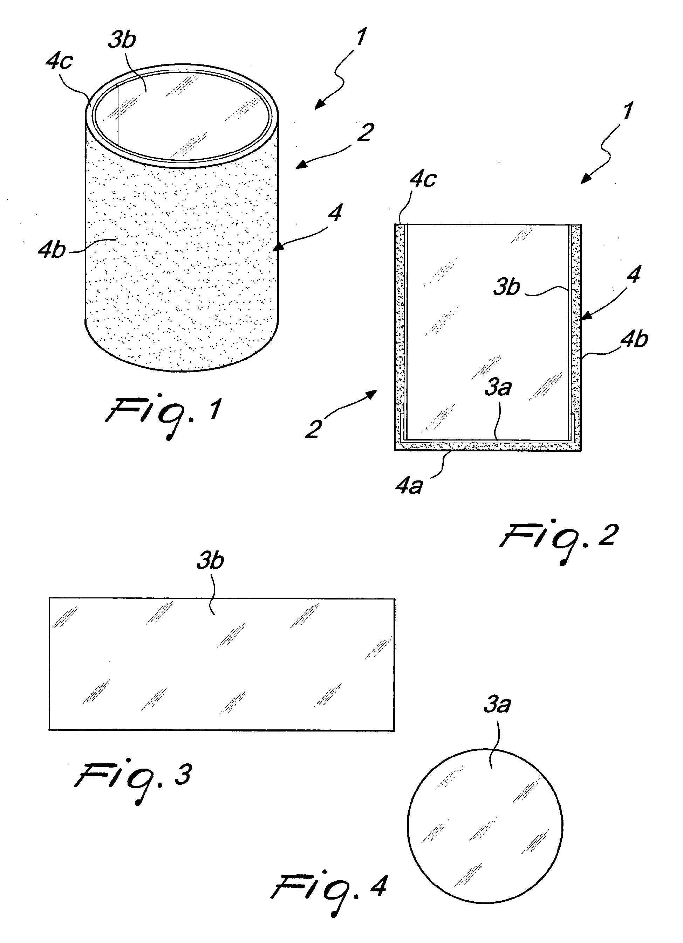

In a first embodiment (Figures 1 and 2), the second barrier element 3b is arranged so as to cover the side wall 4b on the side that is directed toward the inside of the container 1.

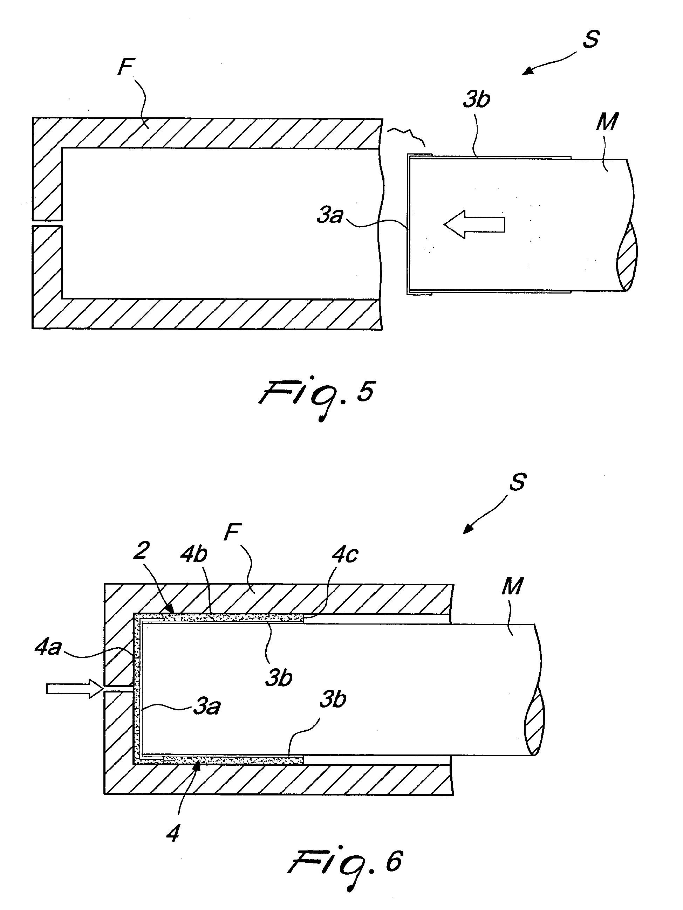

The method for obtaining the container 1 (Figures 3-6) entails:
- shaping by die-cutting the first barrier element 3a, which has a larger extension than the bottom wall 4a, and the second barrier element 3b, shaped like a band, from a flexible aluminum sheet;
- arranging the first barrier element 3a at the bottom of the plug that acts as a male mold half M and the second barrier element 3b wrapped so as to adhere to such plug. It is possible to seal the second barrier element 3b along the mutually opposite sides so as to obtain a closed band. The first barrier element 3a is kept in position by means of the vacuum provided inside the male mold half M (which is internally hollow);
- closing the mold S by moving the male mold half M and the female mold half F mutually closer. In the closure of the mold S, the peripheral portion of the first barrier element 3 a that protrudes beyond the extension of the bottom wall 4a folds onto the second barrier element 3b, so as to seal its joint;
- injecting plastics into the mold S;
- shaping the stiffening structure 2 made of plastics within the mold S directly on the barrier elements 3a and 3b. The stiffening structure 2 that is obtained is directly and integrally (i.e., on the entire surface in contact) cohesive with the barrier elements 3a and 3b so as to form a barrier-type container 1.

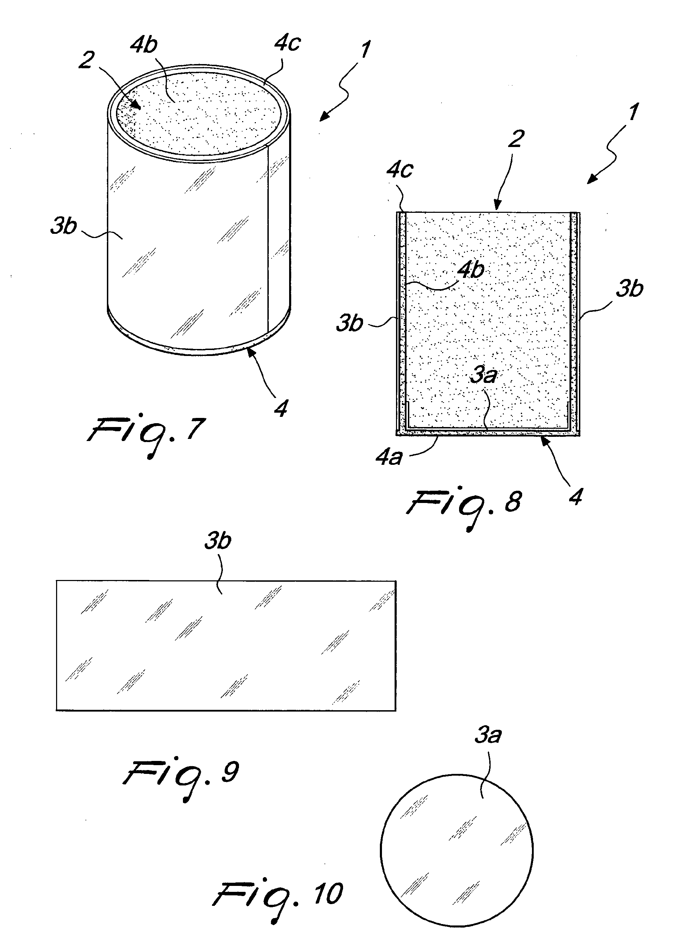

In a second embodiment (Figures 7-8), the second barrier element 3b is arranged so as to cover the side wall 4b on the side that is directed toward the outside of the container 1.

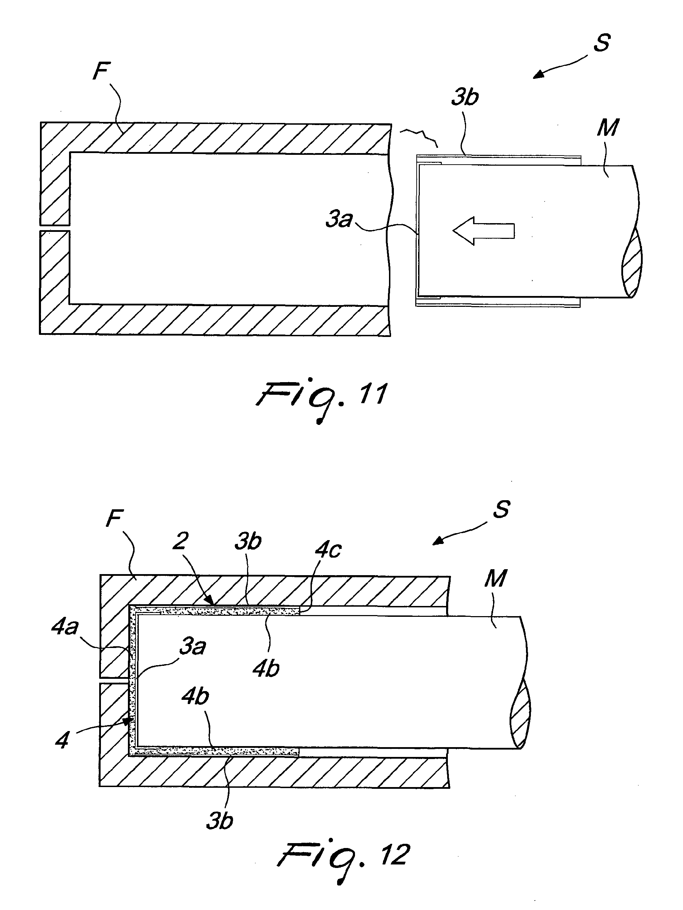

The method for obtaining the container 1 (Figures 9-12) entails:
- shaping by die-cutting the first barrier element 3a, which has a larger extension than the bottom wall 4a, and the second barrier element 3b, which is band-shaped, from a flexible aluminum sheet;
- arranging the first barrier element 3a at the bottom of the plug that acts as a male mold half M and the second barrier element 3b so that it is wrapped with play around such plug. The second barrier element 3b can be sealed along the opposite sides so as to obtain a closed band. The first barrier element 3a is kept in position by means, of the vacuum produced inside the male mold half M (which is internally hollow) and the perimetric portion that protrudes beyond the extension of the bottom wall 4a must be folded onto the plug and surmounted by the second barrier element 3b;
- closing the mold S, by moving the male mold part M and the female mold part F closer to each other;
- injecting plastic material into the mold S. The injected material flows through the gap formed between the edge of the first barrier element 3a, which is folded onto the male mold half M and the second barrier element 3b, pressing them in contact respectively with the male mold half M and with the wall of the female mold half F;
- shaping the stiffening structure 2 made of plastics inside the mold S directly in contact with the barrier elements 3a and 3b to which sealing is performed. The stiffening structure 2 that is obtained is jointly connected directly and integrally (i.e., on the entire surface in contact) with the barrier elements 3a and 3b so as to obtain a barrier-type container 1.

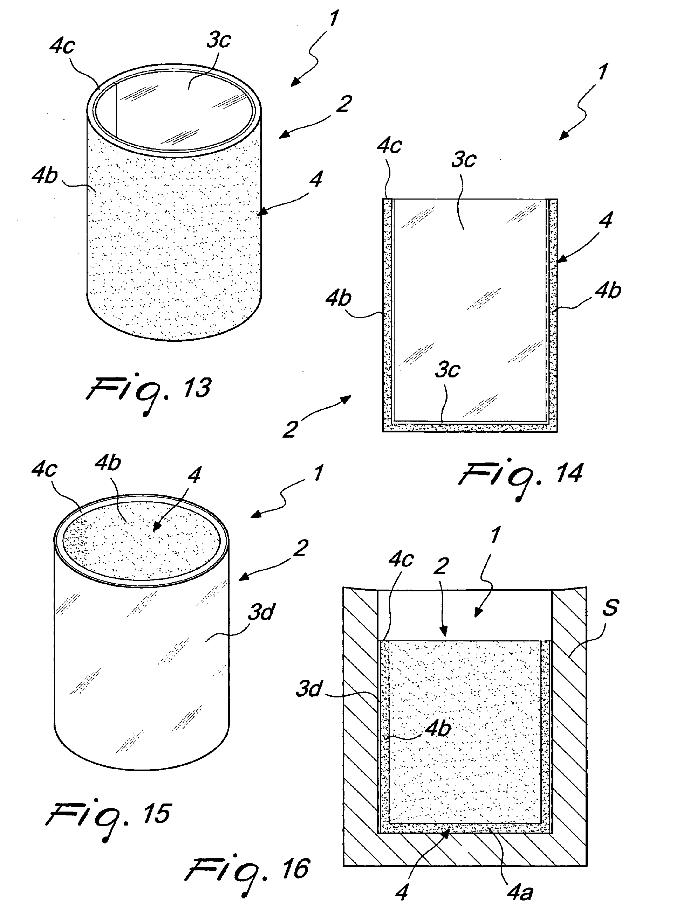

In a third embodiment (Figures 13-14), the barrier element 3c consists of an enclosure whose shape substantially matches the interior of the vessel 4, is arranged inside it and is directly jointly connected thereto at least at the mouth 4c, such vessel being obtained by blow-molding.

The method for the production of the container 1 entails:
- shaping at least one barrier element 3 from a flexible aluminum sheet;
- sealing such barrier element so as to obtain an enclosure 3c;
- shaping the vessel 4 by blow-molding;
- arranging the enclosure 3c inside the vessel 4 with the opening at the mouth 4c;
- heat-sealing the enclosure 3c to the vessel 4 at least at the mouth 4c so as to obtain a barrier-type container 1.

In this case, the vessel 4 and the enclosure 3c are directly jointly connected at the regions where heat-sealing is performed.

Moreover, in a fourth embodiment (Figures 15-16) the barrier element 3d is jointly connected directly and integrally outside the vessel 4 at least at the side wall 4b, such vessel being obtained by blow-molding.

The method for the production of the container 1 entails shaping the barrier element 3d in the form of a band and inserting it in a mold S for blow-molding. As a consequence of the insertion of the portion of extruded plastic material in the mold S, the blow-molding action that causes the expansion and molding of the stiffening structure 2 ensures adhesion of the side wall 4b to the barrier element 3d.

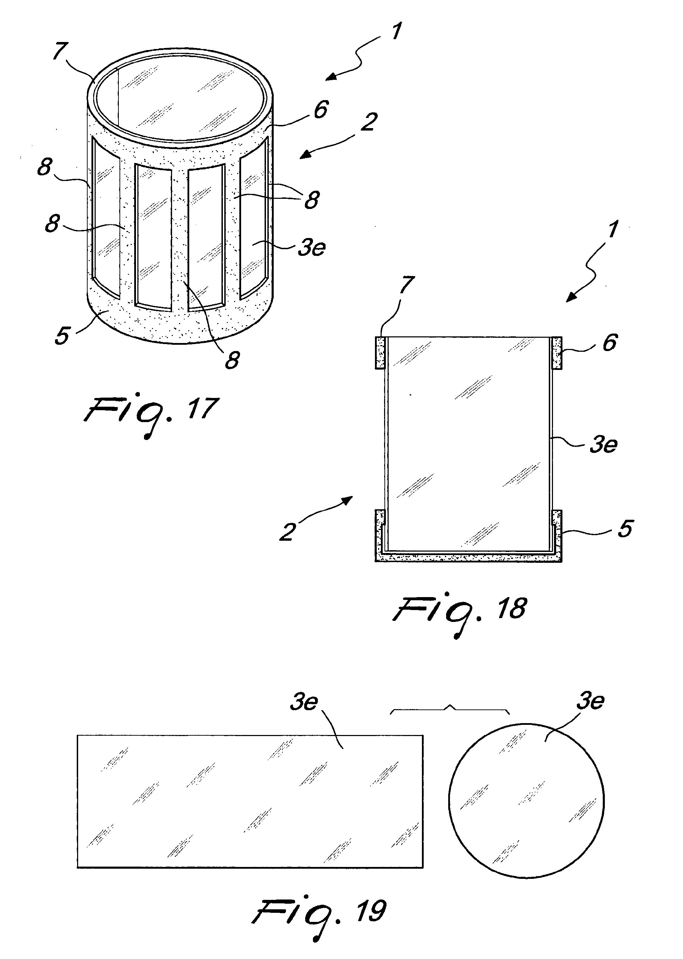

In a fifth embodiment (Figures 17-18) according to the invention, the container 1 is of the semirigid type and the stiffening structure 2 comprises a bottom element 5 and a collar 6 which forms an open mouth 7, which are mutually spaced. The stiffening structure 2 can have a plurality of spacers 8 interposed between the bottom element 5 and the collar 6, so as to increase the resistance to crushing of the container 1.

The barrier element 3e consists of an open enclosure whose shape substantially matches the surface delimited by the stiffening structure 2, is arranged inside it and is jointly connected directly and integrally thereto, the stiffening structure 2 being obtained by injection-molding.

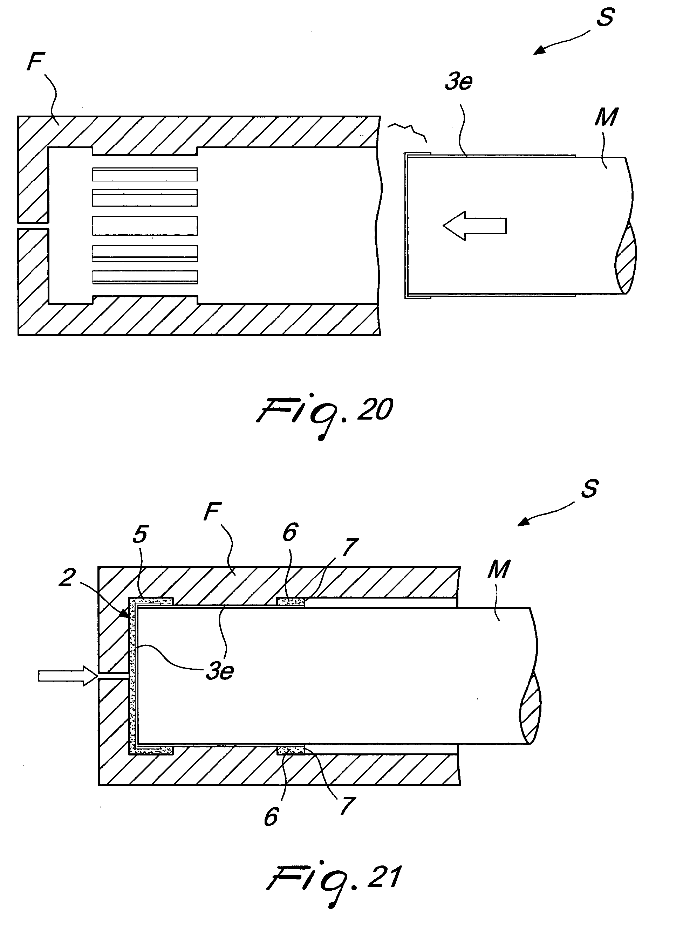

The production method (Figures 19-24) of the container 1 entails:
- shaping the enclosure 3e, by die-cutting and subsequent heat-sealing of two or more portions of a flexible aluminum sheet;
- fitting the enclosure 3e on the plug that acts as a male mold half M and keeping it in position by means of the vacuum provided inside such plug (which is internally hollow);

- closing the mold S, moving the male mold half M and the female mold half F closer to each other;
- injecting plastics into the mold S;
- shaping the stiffening structure 2 made of plastics within the mold S directly in contact with the enclosure 3e, to which it is heat-sealed. The stiffening structure 2 that is obtained is jointly connected directly and integrally (i.e., on the entire surface in contact) with the enclosure 3e so as to obtain a barrier-type container 1.

In this version, separation of the plastics from the metallic material is facilitated for sorted collection of waste and associated recycling.

Finally, the stiffening structure 2 can have a lid 9 which is detachably associated with the mouth 4c or 7 by interlocking or by threaded coupling. The lid 9 has at least one face which is covered by an additional barrier element 3f, which is jointly connected directly and integrally thereto, such lid being obtained by injection-molding.

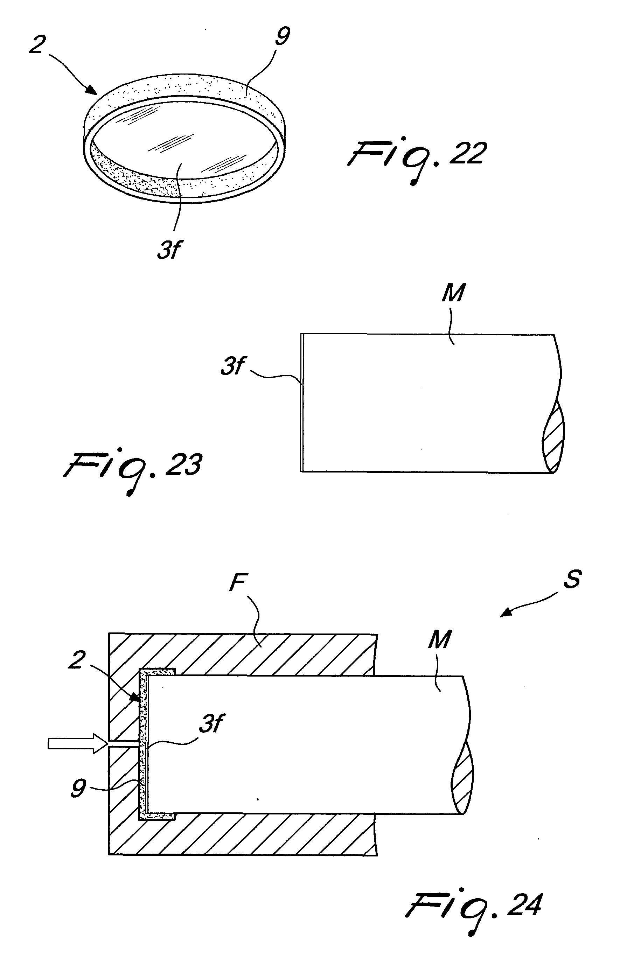

If the lid 9 is covered at the face that is directed toward the inside of the container 1 (Figures 22-24), the barrier element 3f obtained by die-cutting is arranged at the bottom of the plug that acts as a male mold half M.

During injection-molding, the lid 9 is heat-sealed onto the barrier element 3f.

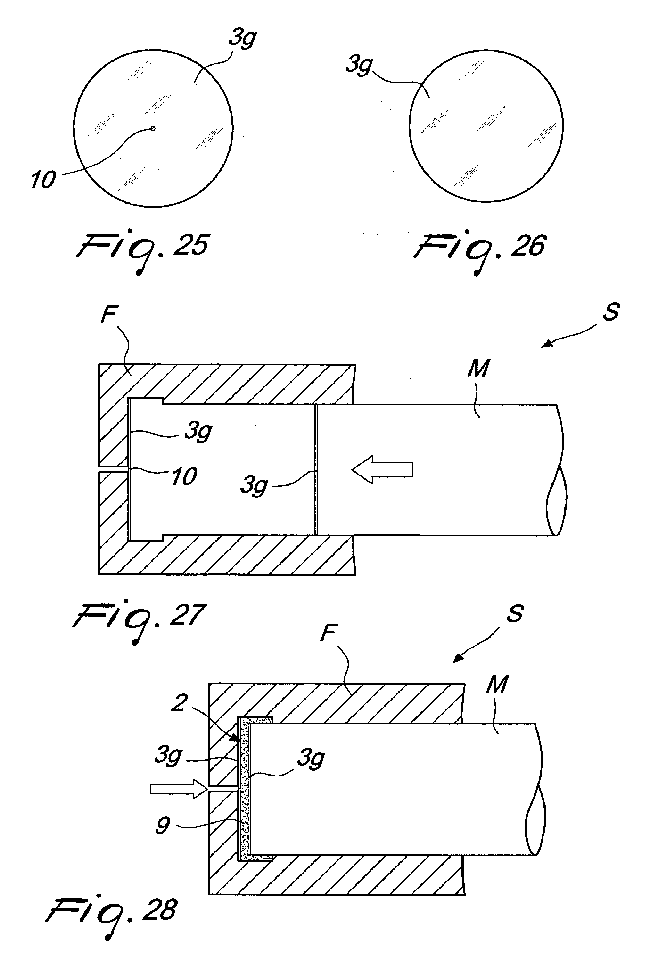

If it is necessary to cover the lid 9 on both faces (Figures 25-28), two barrier elements 3e are arranged within the mold S, the one facing the bottom of the female mold half F being provided with one or more microperforations 10 in order to allow the passage of the injected plastics.

During the injection of the plastics, it flows through the micro-perforation 10, distributing itself between the two barrier elements 3e and pressing them against the respective mold parts, so as to occupy the cavity of the mold S.

As an alternative, one of the two barrier elements 3e can be replaced with a label or the like.

It is noted that the container 1 can have a different shape and different dimensions depending on its intended use and can be shaped so as to form, for example, one or more handles.

Moreover, in the versions in which the packaged product is in contact with the aluminum, the outer stiffening structure can be provided by means of recovered plastics that meets adequate suitability requirements, containing production costs.

In practice it has been found that the described invention achieves the proposed aim and objects, and in particular the fact is stressed that the container according to the invention makes it possible to obtain a barrier-type package of the rigid and semirigid type made of plastics by means of traditional injection-molding or blow-molding processing methods.

The invention thus conceived is susceptible of numerous modifications and variations, all of which are within the scope of the appended claims.

In practice, the materials used, as well as the contingent shapes and dimensions, may be any according to specific requirements of the product to be packaged without thereby abandoning the scope of protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A barrier-type container (1) made of plastics, comprising a stiffening structure (2) made of plastics which is obtained by injection-molding or blow-molding and, the stiffening structure comprising a bottom element (5) and a collar (6) that forms an open mouth (7);
and at least one barrier element (3a, 3b, 3c, 3d, 3e, 3f) made of a flexible aluminum sheet, wherein the stiffening structure (2) and the at least one barrier element directly joined at at least one respective portion, the barrier element (3e) being sealable to at least the stiffening structure (2), **characterized in that** said stiffening structure (2) comprises a plurality of spacers (8), which are interposed between said bottom element (5) and said collar (6).

2. The container (1) according to claim 1, **characterized in that** said barrier element (3e) consists of an open enclosure whose shape is substantially complementary to the surface delimited by said stiffening structure (2) and is arranged inside it so as to be directly and integrally monolithic therewith, said structure being obtained by injection molding.

3. The container (1) according to one or more of the preceding claims, **characterized in that** said stiffening structure (2) comprises a lid (9) that is associated detachably with said mouth (4c or 7) and has at least one face covered with an additional barrier element (3f or 3g), made of flexible aluminum sheet, which is directly connected to said face, the lid cover (9) being obtained by injection molding.

4. A method for manufacturing a barrier-type container made of plastics as set forth in any of the preceding claims, **characterized in that** it comprises the following steps:
- treating a flexible aluminum sheet so as to make it of a double sealing type by coating on the mutually opposite surfaces thereof a coating material that make said opposite surfaces sealable both with the plastic material of the container and onto itself;
- shaping at least two barrier elements (3f) made of said double sealing flexible aluminum sheet;
- arranging said barrier elements (3f) within a forming mold (S) at one of the male or female mold halves (M, F);
- closing the mold (S), keeping in position said barrier elements ( 3e);
- feeding plastics into the mold (S);
- shaping a stiffening structure (2) made of plastics within said mold (S) that has at least one portion which is directly monolithically connected to said barrier elements (3e), so as to obtain a barrier-type container (1) made of plastics.

5. The method according to claim 6, **characterized in that** after the step of shaping said at least two barrier elements a further step is provided for
- heat-sealing said barrier elements (3e) so as to obtain an open enclosure.

## Patentansprüche

1. Ein barriereartiger Behälter (1) aus Kunststoff, der eine Versteifungsstruktur (2) aus Kunststoff umfasst, die durch Spritzgießen oder Blasformen gewonnen wird, und wobei die Versteifungsstruktur Folgendes aufweist:
ein Bodenelement (5) und einen Ring (6), der eine offene Mündung (7) bildet;
und mindestens ein Barriereelement (3a, 3b, 3c, 3d, 3e, 3f) aus einer biegsamen Aluminiumfolie, wobei die Versteifungsstruktur (2) und das mindestens eine Barriereelement in mindestens einem entsprechenden Abschnitt direkt verbunden sind und das Barriereelement (3e) mindestens an der Versteifungsstruktur (2) abgedichtet werden kann, **dadurch gekennzeichnet, dass** die Versteifungsstruktur (2) eine Vielzahl von Abstandselementen (8) aufweist, die zwischen dem Bodenelement (5) und dem Ring (6) angeordnet sind.

2. Der Behälter (1) gemäß Anspruch 1, **dadurch gekennzeichnet, dass** das Barriereelement (3e) aus einem offenen Gehäuse besteht, dessen Form im Wesentlichen komplementär zu der Oberfläche ist, die von der Versteifungsstruktur (2) begrenzt wird, und in ihr so angeordnet ist, dass es direkt und integral monolithisch damit ist, wobei die Struktur durch Spritzgießen gewonnen wird.

3. Der Behälter (1) gemäß einem oder mehreren der obigen Ansprüche, **dadurch gekennzeichnet, dass** die Versteifungsstruktur (2) einen Deckel (9) aufweist, der lösbar mit der Mündung (4c oder 7) verbunden ist und von dem mindestens eine Fläche mit einem zusätzlichen Barriereelement (3f oder 3g) aus biegsamer Aluminiumfolie bedeckt ist, das direkt mit der Fläche verbunden ist, wobei der Deckel (9) durch Spritzgießen hergestellt wird.

4. Ein Verfahren zur Herstellung eines barriereartigen Behälters aus Kunststoff wie in einem beliebigen der obigen Ansprüche ausgeführt, **dadurch gekennzeichnet, dass** es folgende Schritte umfasst:
- Behandlung einer biegsamen Aluminiumfolie, um sie doppelt abdichtend zu machen, durch Beschichtung der einander gegenüberliegenden Oberflächen davon mit einem Beschichtungsmaterial, das die gegenüberliegenden Oberflächen sowohl mit dem Kunststoffmaterial des Behälters als auch mit sich selbst abdichtbar macht;
- Formen mindestens zweier Barriereelemente (3f), die aus der doppelt abdichtenden biegsamen Aluminiumfolie bestehen;
- Anordnung der Barriereelemente (3f) in einer Form (S) an entweder der männlichen oder der weiblichen Formhälfte (M, F);
- Schließen der Form (S), wobei die Barriereelemente (3e) an Ort und Stelle gehalten werden;
- Zugabe von Kunststoff in die Form (S);
- Formen einer Versteifungsstruktur (2) aus Kunststoff in der Form (S), die mindestens einen Teil hat, der direkt monolithisch mit den Barriereelementen (3e) verbunden ist, um einen barriereartigen Behälter (1) aus Kunststoff zu gewinnen.

5. Das Verfahren gemäß Anspruch 6, **dadurch gekennzeichnet, dass** nach dem Schritt des Formens der mindestens zwei Barriereelemente ein weiterer Schritt bereitgestellt wird zum
- Heißsiegeln der Barriereelemente (3e), um ein offenes Gehäuse zu erhalten.

## Revendications

1. Contenant du type barrière (1) réalisé en matière plastique, comprenant une structure de raidissement (2) réalisée en matière plastique qui est obtenue par moulage par injection ou par moulage par soufflage, la structure de raidissement comprenant :
un élément inférieur (5) et un collier (6) qui forme une embouchure ouverte (7) ;
et au moins un élément de barrière (3a, 3b, 3c, 3d, 3e, 3f) réalisé dans une feuille d'aluminium souple, dans lequel la structure de raidissement (2) et le au moins un élément de barrière se rejoignent directement au niveau d'une partie respective au moins, l'élément de barrière (3e) pouvant être scellé à la structure de raidissement (2) au moins, **caractérisé en ce que** ladite structure de raidissement (2) comprend une pluralité d'entretoises (8), qui sont interposées entre ledit élément inférieur (5) et ledit collier (6).

2. Contenant (1) selon la revendication 1, **caractérisé en ce que** ledit élément de barrière (3e) se compose d'une enceinte ouverte dont la forme est sensiblement complémentaire de la surface délimitée par ladite structure de raidissement (2) et qui se situe à l'intérieur de celui-ci de façon à être monolithique directement et d'une pièce, ladite structure étant obtenue par moulage par injection.

3. Contenant (1) selon une ou plusieurs des revendications précédentes, **caractérisé en ce que** ladite structure de raidissement (2) comprend un couvercle (9) qui est associé de manière amovible à ladite embouchure (4c ou 7) et qui présente au moins une face couverte par un élément de barrière supplémentaire (3f ou 3g), réalisé dans une feuille d'aluminium souple, qui est directement relié à ladite face, le couvercle (9) étant obtenu par moulage par injection.

4. Procédé destiné à fabriquer un contenant du type barrière réalisé en matière plastique selon l'une quelconque des revendications précédentes, **caractérisé en ce qu'**il comprend les étapes suivantes consistant à :
- traiter une feuille d'aluminium souple de façon à la rendre d'un type à double étanchéité en enduisant les surfaces mutuellement opposées de celle-ci d'un matériau de revêtement qui rend lesdites surfaces opposées scellables avec le matériau de matière plastique du récipient et sur elle-même ;
- former deux éléments de barrière (3f) au moins réalisés dans ladite feuille d'aluminium souple à double étanchéité ;
- disposer lesdits éléments de barrière (3f) à l'intérieur d'un moule de formage (S) au niveau d'un des demi-moules mâle ou femelle (M, F) ;
- fermer le moule (S), en maintenant en position lesdits éléments de barrière (3e) ;
- introduire la matière plastique dans le moule (S) ;
- former une structure de raidissement (2) réalisée en matière plastique dans ledit moule (S) qui présente au moins une partie qui est reliée de manière directe et monolithique auxdits éléments de barrière (3e), de façon à obtenir un contenant de type barrière (1) réalisé en matière plastique.

5. Procédé selon la revendication 6, **caractérisé en ce qu'**il est prévu, après l'étape consistant à former lesdits deux éléments de barrière au moins, une autre étape consistant à :
- thermosouder lesdits éléments de barrière (3e) de façon à obtenir une enceinte ouverte.
